# FASCICULE DE BREVET EUROPEEN

(11) **EP 3 191 342 B1**
(45) Date de publication et mention de la délivrance du brevet: **07.11.2018**
(21) Numéro de dépôt: 15766917.7
(22) Date de dépôt: 03.09.2015
(51) Int. Cl.: B60P 1/54, B60P 3/08

(54) **VEHICULE DE TRANSPORT A STRUCTURE LONGITUDINALE RALLONGEE POUR UN MANIPULATEUR MOTORISE**
TRANSPORTFAHRZEUG MIT ERWEITERTER LÄNGSSTRUKTUR FÜR EINE MOTORBETRIEBENE HANDHABUNGSVORRICHTUNG
TRANSPORT VEHICLE WITH EXTENDED LONGITUDINAL STRUCTURE FOR A MOTOR-DRIVEN HANDLING DEVICE

(30) Priorité: 11.09.2014 FR 1458523
(43) Date de publication de la demande: 19.07.2017
(73) Titulaire: Lohr Electromecanique, 67980 Hangenbieten (FR)
(72) Inventeur: SCHEER, Daniel, F-67190 Still (FR)
(74) Mandataire: Merckling, Norbert
(86) Numéro de dépôt international: PCT/FR2015/052336
(87) Numéro de publication internationale: WO 2016/038283

(56) Documents cités:
- EP-A1- 1 745 981
- US-A- 5 525 026

## Description

### Domaine technique

La présente invention se rapporte au domaine technique général du transport de fret et notamment du transport de charges disposées sur des palettes. Ces charges sont par exemple des voitures présentant des gabarits identiques ou différents.

L'invention concerne plus particulièrement un véhicule routier de transport de charges dont les charges sont déplacées, orientées et déposées par un manipulateur motorisé se déplaçant le long de rails de guidage portés par le véhicule. Ce véhicule comprend des moyens permettant de prolonger la course de déplacement longitudinal du manipulateur et de permettre son passage d'une structure à une autre lorsque le véhicule comprend deux structures de chargement attelées.

### Etat de la technique

On connaît par exemple par l'intermédiaire du document US 4,597,712 un appareil pour charger et décharger des semi-remorques. Cet appareil est monté à l'extrémité arrière d'un espace de chargement et comprend des bras articulés pour saisir latéralement un véhicule s'appuyant sur des supports de roues et déplacer l'ensemble vers une position de chargement. Les diverses opérations et mouvements sont pilotés par un opérateur agissant sur une console de commande. Un tel appareil présente l'inconvénient d'être commandé en continu par un opérateur. En outre, l'opérateur ne dispose pas toujours de l'ensemble des informations nécessaires à un chargement optimal, à un déchargement, à un transport optimal ou à une distribution imposant des contraintes particulières. Il peut arriver ainsi que les charges, en l'occurrence des véhicules, sont disposées, dans des positions de chargement non optimales voire dangereuses. Une erreur de chargement ne peut alors être corrigée qu'en déplaçant à nouveau au moins certaines charges. Il en résulterait notamment une perte de temps substantielle. La préhension des voitures, laquelle doit assurer de par le positionnement des bras de préhension le non basculement de la voiture est par ailleurs effectuée au jugé par un opérateur. La préhension peut donc s'avérer être une opération longue, mais également une opération relativement dangereuse.

Le document EP 1 745 981 A1 divulgue un véhicule routier de transport de charges selon le préambule de la revendication 1.

### Divulgation de l'invention

L'objet de la présente invention vise par conséquent à pallier les inconvénients de l'art antérieur en proposant un véhicule routier de transport de charges comportant un nouveau dispositif de chargement/déchargement dont la mise en oeuvre est simple, rapide et fiable.

Les objets assignés à l'invention sont atteints à l'aide d'un véhicule routier de transport de charges dans lequel des charges portée par des palettes sont déplacées, orientées et déposées dans un espace de chargement par un manipulateur motorisé se déplaçant le long d'une structure longitudinale du véhicule, la structure longitudinale comprenant des rails de guidage longitudinaux portés par le véhicule le long de l'espace de chargement, le véhicule étant caractérisé en ce que :
- deux portes articulées sont prévues pour fermer l'espace de chargement à l'arrière du véhicule ;
- chaque porte articulée comprend un tronçon de rail de guidage longitudinal situé à la même hauteur que les rails de guidage ;
- lorsque les portes articulées sont ouvertes à 90 degrés, chaque tronçon de rail de guidage prolonge l'un des rails de guidage, permettant au manipulateur motorisé de se déplacer à la fois sur les rails de guidage et sur les tronçons de rail de guidage.

Selon un exemple de mise en oeuvre, les rails de guidage sont situés en partie supérieure du véhicule et les tronçons de rail de guidage sont situés en partie supérieure des portes articulées, lorsque les portes articulées sont ouvertes à 90 degrés, chaque rail de guidage se retrouvant à proximité immédiate et selon le même axe longitudinal qu'un tronçon de rail de guidage associé.

Selon un autre exemple de mise en oeuvre, les portes articulées comportent des charnières situées du côté des faces internes de l'espace de chargement.

Selon une variante de mise en oeuvre, le véhicule comprend deux structures de chargement attelées entre elles et comportant chacune une paire de rails de guidage pour le déplacement du manipulateur motorisé, et il comprend en outre des moyens de rapprochement des rails de guidage portés par chacune des structures de chargement prévus pour que chaque paire de rails de guidage d'une structure de chargement soit rapprochée à proximité immédiate de la paire de rails de guidage de l'autre structure de chargement ou inversement.

Selon cette variante de mise en oeuvre, les moyens de rapprochement peuvent comprendre un timon télescopique, des rails de guidage télescopiques, un système hélicoïdal du type vis-écrou ou tout autre moyen de rapprochement connu.

Selon cette variante de mise en oeuvre, les moyens de rapprochement peuvent être aptes à déplacer une structure de chargement par rapport à l'autre structure de chargement.

Selon une autre variante de mise en oeuvre, le véhicule comprend un tracteur et une semi-remorque, laquelle supporte la structure de chargement.

Selon une variante supplémentaire de mise en oeuvre, le véhicule comprend un tracteur supportant la structure de chargement et une remorque attelée supportant l'autre structure de chargement.

Selon une variante de mise en oeuvre précédente, le véhicule peut comprendre un système de centrage pour compenser un léger décalage entre les rails de guidage avant et arrière lors du rapprochement des deux structures de chargement, ce système de centrage comprenant une paire de cônes d'engagement et des logements de forme complémentaire, prévus sur les extrémités respectives de chaque rail de guidage.

Le véhicule peut également comprendre un système de compensation apte à compenser un léger roulis, tangage et lacet entre les bases des structures de chargement lors de leur rapprochement mutuel, ce système de compensation comprenant des parties d'engagement de forme complémentaire des bases, lesquelles comprennent une partie d'engagement femelle en retrait prévue à l'arrière de la base de la structure de chargement avant et une partie d'engagement mâle en saillie prévue à l'avant de la base de la structure de chargement arrière.

Selon cette variante de mise en oeuvre, les parties d'engagement peuvent présenter chacune une partie inclinée servant de rampe de guidage et de butée pour la réception de la partie d'engagement mâle dans la partie d'engagement femelle.

Un avantage du véhicule conforme à l'invention réside dans son niveau élevé d'automatisation des opérations de chargement et de déchargement.

Un autre avantage du véhicule conforme à l'invention réside dans un gain de temps substantiel lors des opérations de chargement et de déchargement. En effet, l'automatisation de ces opérations permet à l'opérateur, par exemple lors du chargement de voitures, à aller chercher une autre voiture à charger, pendant que l'automate procède au placement automatisé d'une voiture dans sa position de chargement. Un gain de temps similaire est observé lors des opérations de déchargement.

Un autre avantage du véhicule conforme à l'invention réside dans la grande fiabilité qu'il procure et ce malgré un degré élevé d'automatisation.

Un autre avantage du dispositif de chargement/déchargement conforme à l'invention réside dans le fait qu'il s'adapte à des charges de nature différente.

Un autre avantage du véhicule conforme à l'invention réside dans le fait qu'il permet de charger et de décharger très facilement et en toute sécurité des espaces de chargements distincts d'un convoi articulé, constitué par exemple d'une remorque attelée à un véhicule motorisé.

Un autre avantage du véhicule conforme à l'invention réside dans l'obtention d'une course de déplacement accrue pour un chariot déplaçant le manipulateur motorisé.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en perspective d'un exemple de réalisation d'un véhicule conforme à l'invention pouvant être chargé et déchargé en utilisant des palettes manipulées par le manipulateur motorisé, le véhicule étant une semi-remorque représentée lors d'une opération de préhension et de chargement d'une palette supportant une voiture par le manipulateur motorisé ;
- la figure 2 est une vue de profil d'un exemple de réalisation d'un véhicule conforme à l'invention, le véhicule étant un véhicule à deux structures de chargement attelées représenté à vide en configuration de roulage ;
- la figure 3 illustre le véhicule de la figure 2 représenté à vide dans une configuration de chargement/déchargement ;
- la figure 4 illustre le véhicule de la figure 2 représenté pleinement chargé dans une configuration de roulage ;
- la figure 5 est une vue partielle, en perspective d'un exemple de réalisation d'un timon d'un véhicule conforme à l'invention, comportant un moyen pour vérifier l'alignement de ses deux structures de chargement ; et
- les figures 6a, 6b et 6c illustrent un exemple de rapprochement entre deux structures de chargement d'un véhicule conforme à l'invention.

### Mode(s) de réalisation de l'invention

Les éléments structurellement et fonctionnellement identiques présents sur plusieurs figures distinctes, sont affectés d'une même référence numérique ou alphanumérique.

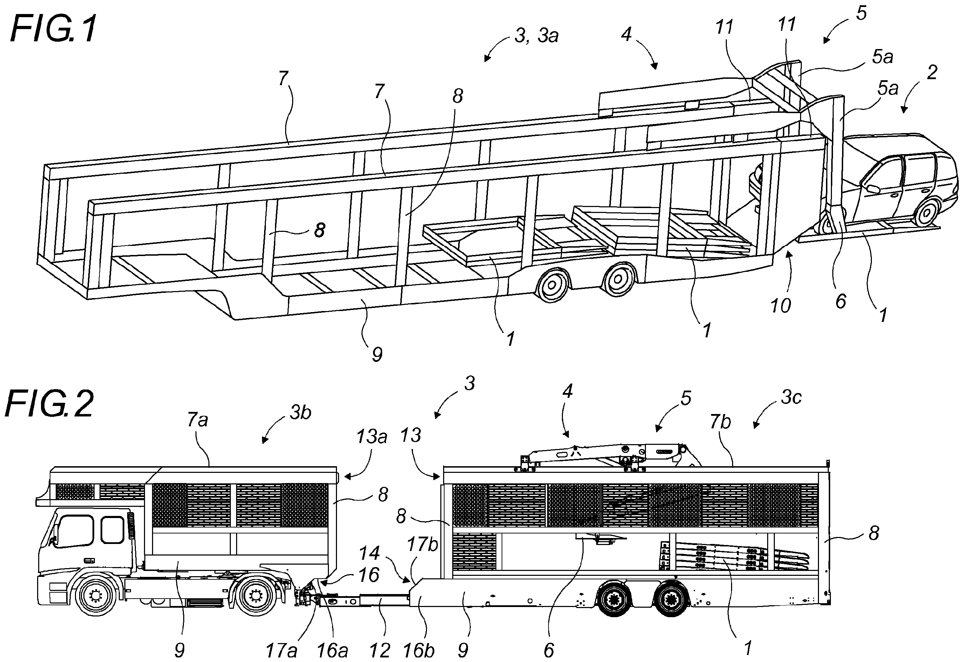

La figure 1 illustre une phase de chargement dans laquelle une palette 1 supporte une charge 2, en l'occurrence une voiture, lors d'un chargement sur un véhicule 3, par exemple une semi- remorque 3a.

La palette 1 chargée est déplacée par l'intermédiaire d'un manipulateur 5 motorisé lequel saisit la palette 1 par l'intermédiaire de préhenseurs 6. La palette 1 est saisie ou accrochée via le préhenseur 6 sur chacun de ses côtés latéraux et plus précisément sur chacun de ses longerons latéraux.

Un charriot 4 portant le manipulateur 5 se déplace sur des rails de guidage 7 longitudinaux, c'est à dire s'étendant le long et de part et d'autre d'un espace de chargement délimité dans la semi-remorque 3a. Les rails de guidage 7 sont de préférence situés en partie supérieure de l'espace de chargement.

Le charriot 4 permet ainsi de déplacer le manipulateur 5 et par conséquent la palette 1 dans l'espace de chargement.

Les bras latéraux 5a sont avantageusement télescopiques et articulés sur le charriot 4 et les préhenseurs 6 sont quant à eux articulés sur les extrémités inférieures desdits bras latéraux 5a.

Le manipulateur 5 permet ainsi d'une part de déplacer la palette 1 dans une direction verticale et dans une direction horizontale et d'autre part de modifier via les préhenseurs 6, l'orientation de la palette 1.

Le déplacement et l'orientation de la palette 1 sont obtenus notamment par l'intermédiaire d'actionneurs, du genre vérins hydrauliques lesquels ne seront pas décrits plus en détails dans la présente. Il est également envisageable d'utiliser des actionneurs électriques ou pneumatiques.

Sur ses côtés latéraux, le véhicule 3 peut présenter des parois latérales constituant une structure support pour les palettes 1. La structure support s'étend avantageusement entre les montants 8 reliant une base 9 du véhicule 3 aux rails de guidage 7.

A l'arrière, le véhicule 3 comporte deux portes 10 articulées prévues pour fermer l'espace de chargement. Chaque porte 10 articulée comprend un tronçon de rail de guidage 11, de préférence en partie supérieure des portes 10, et situé à la même hauteur que les rails de guidage 7.

Ainsi, lorsque les portes 10 articulées sont ouvertes à 90 degrés, chaque tronçon de rail de guidage 11 prolonge l'un des rails de guidage 7 pour former un rail de guidage prolongé, permettant au manipulateur 5 de se déplacer à la fois sur les rails de guidage 7 et sur les tronçons de rail de guidage 11, prolongeant ainsi sa course vers l'arrière.

Lorsque les portes 10 articulées sont ouvertes à 90 degrés, chaque tronçon de rail de guidage 11 se retrouve préférentiellement à proximité immédiate de l'un des rails de guidage 7, dans son prolongement, et le selon le même axe longitudinal. Ainsi, lors de son déplacement le long des rails de guidage 7 prolongés, le manipulateur 5 ne rencontre aucune discontinuité de rail pouvant entraver son fonctionnement. Les charnières des portes 10 sont préférentiellement prévues du côté des faces internes de l'espace de chargement.

Les figures 2 à 4 illustrent le cas d'un véhicule 3 comprenant une structure de chargement 3b avant et une autre structure de chargement 3c arrière. Ces structures de chargement 3b et 3c sont attelées entre elles par un timon 12 reliant un tracteur supportant la structure de chargement 3b avant à une remorque supportant la structure de chargement 3c arrière. Les structures de chargement 3b et 3c comportent chacune une paire de rails de guidage 7a, 7b pour assurer le déplacement du manipulateur 5 via le chariot 4.

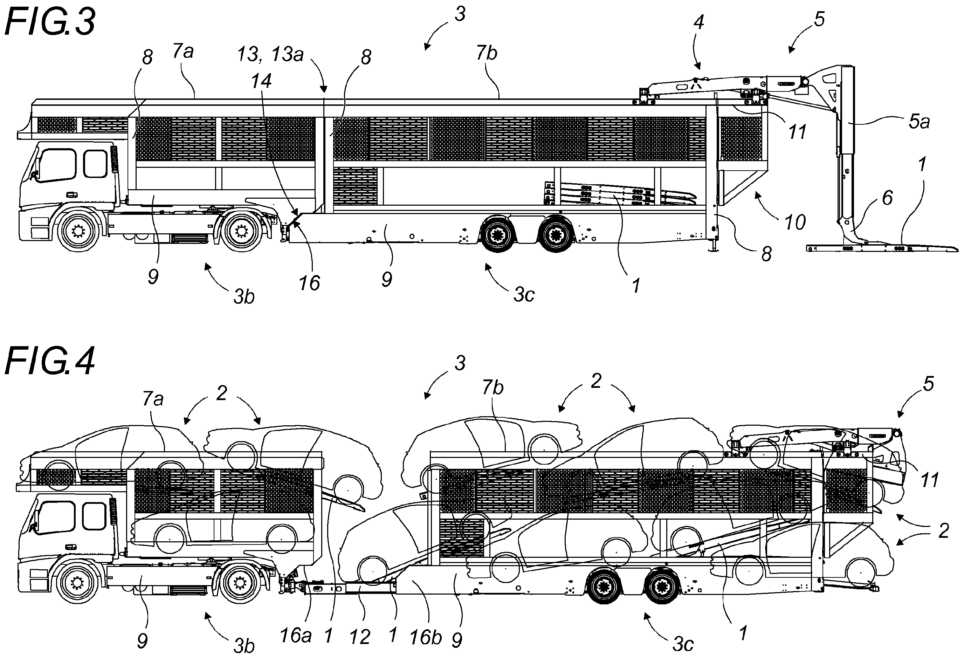

Lorsque ce véhicule 3 se déplace, il est nécessaire d'avoir un espacement entre les structures de chargement 3b et 3c afin de permettre le pivotement de l'une par rapport à l'autre dans les courbes. Ainsi, en position de roulage représentée sur les figures 2 et 4, les structures de chargement 3b et 3c sont distantes et par conséquent leurs rails de guidage avant 7a et arrière 7b ne sont pas à proximité immédiate les uns des autres.

En position de chargement/déchargement, afin de permettre le déplacement du manipulateur 5 le long des rails de guidage 7a, 7b, il est nécessaire de placer ces rails de guidage 7a, 7b à proximité immédiate les uns des autres.

Une première solution consiste par exemple à utiliser des moyens de rapprochement comprenant un timon 12 télescopique. Ainsi, lorsqu'il est nécessaire de charger ou décharger le véhicule 3, le timon 12 télescopique se rétracte de manière à rapprocher les structures de chargement 3b et 3c jusqu'à ce que leurs rails de guidage 7a, 7b se trouvent à proximité immédiate les uns des autres ou en contact. Lorsqu'il est nécessaire de déplacer le véhicule 3, le timon 12 télescopique se déploie à nouveau en position de roulage.

Une seconde solution consiste par exemple à utiliser des moyens de rapprochement comprenant des rails de guidage 7a et/ou 7b télescopiques. Ainsi, lorsqu'il est nécessaire de charger ou décharger le véhicule 3, l'un au moins des rails de guidage 7a et 7b est télescopique et se déploie de manière à se rapprocher mutuellement de l'autre rail de guidage 7b et 7a jusqu'à ce qu'ils se trouvent à proximité immédiate les uns des autres ou en contact. Lorsqu'il est nécessaire de déplacer le véhicule 3, les rails de guidage 7a et/ou 7b télescopiques se rétractent à nouveau en position de roulage.

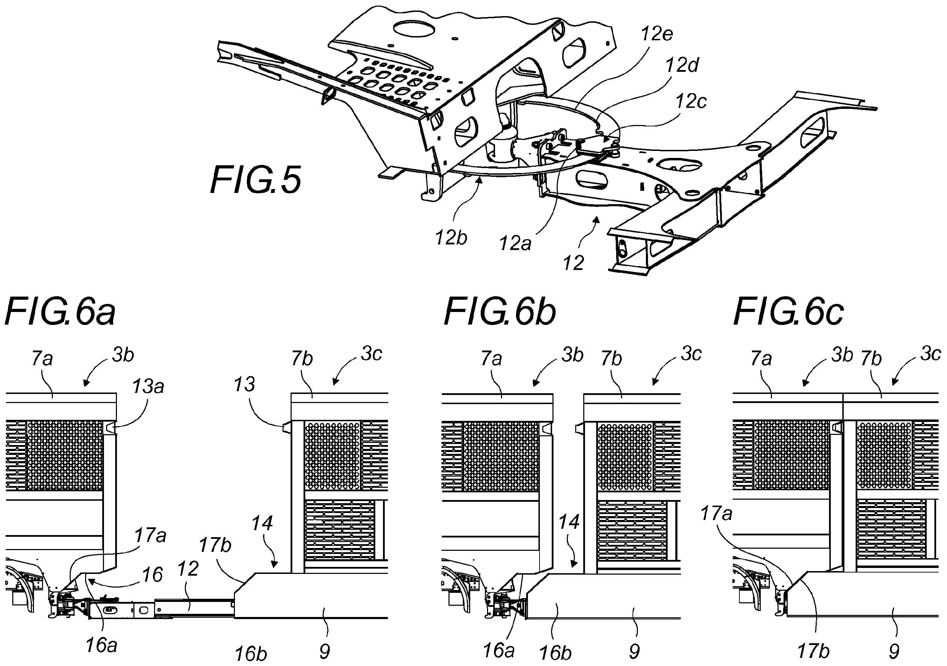

Le véhicule 3 conforme à l'invention peut également comporter un moyen de détection permettant de vérifier l'alignement entre les structures de chargement 3b et 3c. Un tel moyen de détection, illustré par exemple à la figure 5 comprend par exemple un détecteur de position 12a qui détermine l'alignement relatif moyen de détection. Le véhicule 3 est pourvu à cet effet d'une piste 12b, du genre anneau métallique, articulée sur sa carrosserie, par exemple sur la base 9 de la structure de chargement 3b. Cette piste 12b s'étend en partie au-dessus du timon 12 en étant pincée par des mâchoires 12c fixées sur ledit timon 12.

Le détecteur de position 12a est disposé sur les mâchoires 12c et la piste 12b présente une languette 12d en saillie sur la circonférence interne 12e de la piste 12b. Les dimensions et la position de la languette 12d sont telles qu'en absence de lacet, c'est-à-dire lorsque les structures de chargement 3b et 3c sont alignées, ladite languette 12d est en regard du détecteur de position 12a. Ce dernier transmet une information relative à cet alignement à l'opérateur par exemple par l'intermédiaire d'un voyant lumineux ou sonore. L'opérateur sait alors s'il est autorisé à rapprocher mutuellement les structures de chargement 3b et 3c.

En effet, lors de ce rapprochement, il est important que les structures de chargement 3b et 3c soient sensiblement alignées, afin que leurs rails de guidage avant 7a et arrière 7b puissent se trouver à proximité immédiate les uns des autres selon le même axe longitudinal et ce des deux côtés des structures de chargement 3b et 3c. Le moyen de détection permet par conséquent de donner une information quant à un éventuel défaut d'alignement en lacet empêchant un rapprochement des deux structures 3b et 3c. L'opérateur peut donc manoeuvrer, avant un rapprochement des structures de chargement 3b et 3c pour corriger le lacet de son convoi. Ainsi, lorsque l'angle de lacet entre les deux structures 3b et 3c est dans la plage requise, l'alignement du convoi est acceptable, ce qui est indiqué par l'intermédiaire d'un signal lumineux ou sonore. Le rapprochement des deux structures 3b et 3c peut alors s'effectuer.

Après la correction éventuelle du lacet, il peut être nécessaire, selon le cas de corriger le roulis et/ou le tangage, notamment en cas de courbure de la chaussée. A cet effet, le véhicule 3 conforme à l'invention peut également comporter un système de redressement pour les structures de chargement 3b et 3c. Ce système de redressement, illustré par exemple aux figures 6a, 6b et 6c, comprend par exemple des centreurs pour les rails de guidage 7a, 7b et des sabots 14. Les figures 6a, 6b et 6c montrent des positionnements relatifs entre les deux structures de chargement 3b et 3c lors d'une phase de rapprochement.

Les sabots 14 constituant des parties d'engagement mâle 16b, situés à l'extrémité avant des longerons de la base 9 présentent avantageusement une partie inclinée 17b pour faciliter le guidage et l'engagement dans des parties d'engagement femelles 16a d'une forme complémentaire 16 prévue sur l'extrémité arrière des longerons de l'autre base 9.

Les parties d'engagement femelles 16a présentent avantageusement une face inclinée 17a contre laquelle les partie d'engagement mâles 16b des sabots 14 correspondant viennent en butée, lorsque le rapprochement des structures de chargement 3b et 3c est effectué intégralement.

Les centreurs comprennent par exemple des cônes d'engagement 13 dans le prolongement des rails de guidage 7b et des logements 13a de forme complémentaire, destinés à recevoir lesdits cônes d'engagement 13. Les centreurs permettent ainsi d'aligner correctement les deux extrémités des rails de guidage 7a, 7b et de rigidifier l'ensemble de la structure de chargement pendant les phases de chargement et de déchargement.

L'engagement d'une part des sabots 14 dans les formes complémentaires 16 et l'engagement des cônes 13 dans les logements 13a, permettent, grâce aux efforts absorbés par les suspensions des structures 3b et 3c, de compenser de légers défauts d'alignement en roulis, tangage et lacet entre les deux structures 3b et 3c venant en contact l'une de l'autre lors de leur rapprochement.

Situés dans le prolongement des tronçons de rail de guidage 11 des portes 10 en position ouverte, les rails de guidage 7a, 7b forment avec lesdits tronçons de rail de guidage 11 un rail de guidage prolongé permettant au chariot 4 supportant le manipulateur 5, de se déplacer de l'un à l'autre sur toute leur longueur dans une configuration similaire à celle illustrée sur la figure 1 ou 3.

La figure 4 illustre un véhicule 3 comprenant deux structures de chargement 3b et 3c entièrement chargées avec des voitures. Il est représenté en position de roulage, c'est-à-dire avec les structures de chargement 3b et 3c éloignées l'une de l'autre.

Afin de maximiser le nombre de voiture ainsi transportées, la dernière voiture disposée en position basse à l'arrière de la structure de chargement 3c est chargée sur un plateau extensible s'étendant jusqu'au sol pour le chargement et remontée ensuite dans une position de roulage. La voiture disposée en position haute à l'arrière de la structure de chargement 3c est quant à elle chargée sur une palette 1 pouvant être en partie supportée par les portes 10 en position ouverte.

Le véhicule conforme à l'invention permet également de mettre en oeuvre un procédé de chargement/déchargement d'un véhicule 3 routier de transport de charges utilisant le manipulateur 5 motorisé se déplaçant de manière guidée sur des rails de guidage 7 longitudinaux et ce pour atteindre chacune des positions de chargement déterminées. Ce procédé de chargement/déchargement est préférentiellement commandé par un automate embarqué.

Lors d'un exemple de mise en oeuvre du procédé de chargement/déchargement conforme à l'invention, on exécute successivement les étapes suivantes.

Lors d'une première étape a), on saisit ou on importe des données primaires relatives aux charges 2 dans l'automate. Ces données primaires sont relatives par exemple aux dimensions, au poids et/ou à une orientation préférentielle de chaque charge 2.

Lors d'une étape b), on détermine grâce à l'automate, la position optimale de chargement pour chaque charge 2 en fonction des données primaires et de données complémentaires relatives à des contraintes de chargement/déchargement, de transport et/ou de distribution des charges. Ces données complémentaires sont par exemple saisies par l'opérateur.

Lors d'une étape c), on détermine les déplacements automatisés du manipulateur 5 motorisé par l'intermédiaire de l'automate.

Lors d'une étape d), on saisit automatiquement à l'aide du manipulateur 5 une palette 1 dans une position de stockage dans l'espace de chargement et on positionne ladite palette 1 dans une position de chargement située à l'arrière du véhicule 3. La palette 1 est par exemple posée à plat sur le sol.

On dispose ensuite, lors d'une étape e), une charge 2 sur la palette 1.

Lors d'une étape f), on déplace automatiquement à l'aide du manipulateur 5, la palette 1 supportant la charge 2, dans sa position de chargement optimale et on verrouille automatiquement ladite palette 1 chargée sur les structures support du véhicule 3.

A des fins de déchargement, on utilise l'ensemble des données relatives au chargement enregistrées, pour déterminer selon une étape g) une séquence de déchargement des palettes chargées 1 disposées dans l'espace de chargement.

Ensuite, on déverrouille automatiquement, selon une étape h), la palette 1 chargée et on déplace cette dernière à l'aide du manipulateur 5 vers une position de déchargement extérieure à l'arrière du véhicule.

Selon une étape i), on dégage la charge 2 de la palette 1.

Enfin, selon une étape j), on ramène et on dépose automatiquement à l'aide du manipulateur 5, la palette 1 vide dans une position de stockage dans l'espace de chargement.

Les positions de chargement et les positions de déchargement sont situées en général soit directement au sol, soit sur un quai.

Selon un exemple de mise en oeuvre conforme à l'invention, le procédé consiste à réitérer les opérations de chargement d) à f) et les opérations de déchargement g) à j) de manière à charger, respectivement décharger complètement le véhicule 3.

Selon un exemple de mise en oeuvre conforme à l'invention, le procédé comprend avantageusement l'étape supplémentaire qui consiste à ouvrir les portes 10 articulées à 90 degrés avant l'étape d). Ces portes 10 sont refermées à l'issu du chargement si aucune charge 2 n'entrave cette fermeture manuelle ou assistée.

Dans le cas d'un véhicule 3 comprenant deux structures de chargement 3b et 3c attelées, le procédé comprend avantageusement l'étape supplémentaire qui consiste à rapprocher les rails de guidage 7a, 7b à proximité immédiate les uns des autres avant l'étape d).

Il convient également au préalable de l'étape d) de rapprocher les structures de chargement 3b et 3c en rétractant le timon télescopique 12.

Selon un exemple de mise en oeuvre conforme à l'invention, le procédé consiste à l'issue des opérations de chargement/déchargement, à escamoter le manipulateur 5 dans une position de transport définie sur les structures support.

Sur les différentes figures, les charges 2 sont représentées sous la forme de voitures à titre d'exemple, alors qu'il est évident pour l'homme du métier que l'invention est parfaitement adaptée au chargement/déchargement de tout type de charge.

De même, les véhicules représentés sur les figures ne sont donnés qu'à titre d'exemple et l'invention concerne tout type de véhicule prévus pour charger/décharger des charges dans un espace de chargement, par le manipulateur 5 motorisé se déplaçant le long de rails de guidage 7 longitudinaux portés par le véhicule 3.

Il est évident que la présente description ne se limite pas aux exemples explicitement décrits, mais comprend également d'autres modes de réalisation et/ou de mise en oeuvre.

## Revendications

1. Véhicule (3) routier de transport de charges dans lequel des charges (2) portée par des palettes (1) sont déplacées, orientées et déposées dans un espace de chargement par un manipulateur (5) motorisé se déplaçant le long d'une structure longitudinale du véhicule (3), la structure longitudinale comprenant des rails de guidage longitudinaux (7) portés par le véhicule (3) le long de l'espace de chargement, le véhicule étant **caractérisé en ce que**
- deux portes articulées (10) sont prévues pour fermer l'espace de chargement à l'arrière du véhicule (3) ;
- chaque porte articulée (10) comprend un tronçon de rail de guidage (11) longitudinal situé à la même hauteur que les rails de guidage (7) ;
- lorsque les portes articulées (10) sont ouvertes à 90 degrés, chaque tronçon de rail de guidage (11) prolonge l'un des rails de guidage (7), permettant au manipulateur (5) motorisé de se déplacer à la fois sur les rails de guidage (7) et sur les tronçons de rail de guidage (11).

2. Véhicule (3) selon la revendication 1, **caractérisé en ce que** les rails de guidage (7) sont situés en partie supérieure du véhicule et **en ce que** les tronçons de rail de guidage (11) sont situés en partie supérieure des portes articulées (10), lorsque les portes articulées (10) sont ouvertes à 90 degrés, chaque rail de guidage (7) se retrouvant à proximité immédiate et selon le même axe longitudinal qu'un tronçon de rail de guidage (11) associé.

3. Véhicule (3) selon la revendication 1 ou 2, **caractérisé en ce que** les portes articulées (10) comportent des charnières situées du côté des faces internes de l'espace de chargement.

4. Véhicule (3) selon l'une quelconque des revendications précédentes, **caractérisé en ce qu'**il comprend deux structures de chargement (3b, 3c) attelées entre elles et comportant chacune une paire de rails de guidage (7a, 7b) pour le déplacement du manipulateur (5) motorisé, et **en ce qu'**il comprend en outre des moyens de rapprochement des rails de guidage (7a, 7b) portés par chacune des structures de chargement (3b, 3c) prévus pour que chaque paire de rails de guidage (7b) d'une structure de chargement (3c) soit rapprochée à proximité immédiate de la paire de rails de guidage (7a) de l'autre structure de chargement (3b) ou inversement.

5. Véhicule (3) selon la revendication 4, **caractérisé en ce que** les moyens de rapprochement comprennent un timon (12) télescopique.

6. Véhicule (3) selon la revendication 4, **caractérisé en ce que** les moyens de rapprochement comprennent des rails de guidage (7a ou 7b) télescopiques.

7. Véhicule (3) selon la revendication 4, **caractérisé en ce que** les moyens de rapprochement sont aptes à déplacer une structure de chargement (3b ou 3c) par rapport à l'autre structure de chargement (3c ou 3b).

8. Véhicule (3) selon l'une quelconque des revendications 1 à 3, **caractérisé en ce qu'**il comprend un tracteur et une semi-remorque, laquelle supporte la structure de chargement (3a).

9. Véhicule (3) selon l'une quelconque des revendications 4 à 7, **caractérisé en ce qu'**il comprend un tracteur supportant la structure de chargement (3a) et une remorque attelée supportant l'autre structure de chargement (3b).

10. Véhicule (3) selon l'une quelconque des revendications 4 à 7, **caractérisé en ce qu'**il comprend un système de centrage pour compenser un léger décalage entre les rails de guidage avant (7a) et arrière (7b) lors du rapprochement des deux structures de chargement (3b, 3c), ce système de centrage comprenant une paire de cônes d'engagement (13) et des logements (13a) de forme complémentaire, prévus sur les extrémités respectives de chaque rail de guidage (7b, 7a).

11. Véhicule (3) selon l'une quelconque des revendications 4 à 7, **caractérisé en ce qu'**il comprend un système de compensation apte à compenser un léger roulis, tangage et lacet entre les bases (9) des structures de chargement (3b, 3c) lors de leur rapprochement mutuel, ce système de compensation comprenant des parties d'engagement de forme complémentaire des bases (9), lesquelles comprennent une partie d'engagement femelle (16a) en retrait prévue à l'arrière de la base (9) de la structure de chargement (3b) avant et une partie d'engagement mâle (16b) en saillie prévue à l'avant de la base (9) de la structure de chargement (3c) arrière.

12. Véhicule (3) selon la revendication 11, **caractérisé en ce que** les parties d'engagement (16a, 16b) présentent chacune une partie inclinée (17a, 17b) servant de rampe de guidage et de butée pour la réception de la partie d'engagement mâle (16b) dans la partie d'engagement femelle (16a).

## Patentansprüche

1. Straßenfahrzeug (3) zum Lastentransport, bei dem die auf Paletten (1) geladenen Lasten (2) in einem Ladebereich von einem motorgetriebenen Greifer (5) verlagert, ausgerichtet und abgesetzt wird, der sich entlang einer Längskonstruktion des Fahrzeugs (3) verlagert,
die Längskonstruktion umfasst Längs-Führungsschienen (7), die sich am Fahrzeug (3) entlang des Ladebereichs befinden, wobei das Fahrzeug **dadurch gekennzeichnet ist, dass**
- zwei Gelenktüren (10) vorgesehen sind, um den Ladebereich an der Rückseite des Fahrzeugs (3) zu schließen;
- Jede Tür (10) ein Teilstück der Längs-Führungsschiene (11) in derselben Höhe wie die Führungsschienen (7) umfasst
- wenn die Gelenktüren (10) in einem Winkel von 90 Grad offenstehen, jedes Teilstück der Längs-Führungsschiene (11) eine der Führungsschienen (7) verlängert, was es dem motorgetriebenen Greifer (5) ermöglicht, sich gleichzeitig auf den Führungsschienen (7) und den Teilstücken der Längs-Führungsschiene (11) zu bewegen.

2. Fahrzeug (3) gemäß Anspruch 1, **dadurch gekennzeichnet, dass** die Führungsschienen (7) im oberen Teil des Fahrzeugs angebracht sind und dass die Teilstücke der Führungsschiene (11) sich im oberen Teil der Türen (10) befinden, wenn die Gelenktüren (10) in einem Winkel von 90 Grad offenstehen, befindet sich jede Führungsschiene (7) in unmittelbarer Nähe und auf derselben Längsachse, wie ein Teilstück der verbundenen Führungsschiene (11).

3. Fahrzeug (3) gemäß Anspruch 1 oder 2, **dadurch gekennzeichnet, dass** die Gelenktüren (10) Scharniere enthalten, die sich jeweils auf der Innenseite des Ladebereichs befinden.

4. Fahrzeug (3) nach einem der vorstehenden Ansprüche, **dadurch gekennzeichnet, dass** es zwei Ladeeinrichtungen (3b, 3c) enthält, die aneinander angehängt sind und jeweils ein Paar Führungsschienen (7a, 7b) enthalten, zur Verschiebung des motorgetriebenen Greifers (5) und dass es außerdem Vorrichtungen zu Annäherung der Führungsschienen (7a, 7b) umfasst, befestigt an jeder der Ladeeinrichtungen (3b, 3c), dazu vorgesehen, jedes Paar Führungsschienen (7b) einer Ladeeinrichtung (3c) in die unmittelbare Nähe des Paars Führungsschienen (7a) der anderen Ladeeinrichtung (3b) zu bringen oder umgekehrt.

5. Fahrzeug (3) gemäß Anspruch 4, **dadurch gekennzeichnet, dass** die Annäherungsvorrichtungen eine Teleskopdeichsel (12) enthalten.

6. Fahrzeug (3) gemäß Anspruch 4, **dadurch gekennzeichnet, dass** die Annäherungsvorrichtungen Teleskop- Führungsschienen (7a oder 7b) enthalten.

7. Fahrzeug (3) nach Anspruch 4, **dadurch gekennzeichnet, dass** die die Annäherungsvorrichtungen in der Lage sind eine Ladeeinrichtung (3b oder 3c) bezogen auf die andere Ladeeinrichtung (3c oder 3b) zu verschieben.

8. Fahrzeug (3) nach einem der vorstehenden Ansprüche 1 bis 3, **dadurch gekennzeichnet, dass** es eine Zugmaschine und einen Auflieger umfasst, auf dem die Ladeeinrichtung (3a) befestigt ist.

9. Fahrzeug (3) nach einem der vorstehenden Ansprüche 4 bis 7, **dadurch gekennzeichnet, dass** es eine Zugmaschine umfasst, in der die Ladeeinrichtung (3a) befestigt ist und einen Anhänger, in dem die andere Ladeeinrichtung (3b) befestigt ist.

10. Fahrzeug (3) nach einem der vorstehenden Ansprüche 4 bis 7, **dadurch gekennzeichnet, dass** es ein Zentriersystem umfasst, zum Ausgleich einer leichten Verschiebung zwischen den vorderen (7a) und hinteren (7b) Führungsschienen , bei der Annäherung der beiden Ladeeinrichtungen (3b, 3c), dieses Zentriersystem umfasst ein Paar Einrastkegel (13) und Aufnahmen (13a) komplementärer Form, die auf den jeweiligen Endstücken jeder Führungsschiene (7a, 7b) vorgesehen sind.

11. Fahrzeug (3) nach einem der vorstehenden Ansprüche 4 bis 7, **dadurch gekennzeichnet, dass** es ein Ausgleichssystem umfasst, das in der Lage ist, ein leichtes Rollen, Nicken und Gieren zwischen den Basen (9) der Ladeeinrichtungen (3b, 3c), bei der gegenseitigen Annäherung auszugleichen, dieses Ausgleichssystem umfasst Einrastteile komplementärer Form der Basen (9), die einen zurückgesetzten, aufnehmenden Einrastteil (16a), vorgesehen auf der Rückseite der Basen (9) der vorderen Ladeeinrichtung (3b) und einen herausragenden, Einsteckteil (16b), vorgesehen auf der Vorderseite (9) der hinteren Ladeeinrichtung (3c) umfassen.

12. Fahrzeug (3) gemäß Anspruch 11, **dadurch gekennzeichnet, dass** die Einrastteile (16a, 16b) jeweils einen geneigten Teil (17a, 17b) enthalten, der als Führungs- und Anschlagleiste zur Aufnahme des Einsteckteils (16b) in das Aufnahmeteil (16a) dient.

## Claims

1. Road cargo vehicle (3) for transporting loads wherein loads (2) carried on pallets (1) are moved, oriented and deposited within a loading space by a motor-driven handling device (5) moving along a longitudinal structure of the vehicle (3), the longitudinal structure comprising longitudinal guide rails (7) supported by the vehicle (3) along the loading space; the vehicle being **characterized in that**:
- two hinged doors (10) are provided to close the loading space at the rear of the vehicle (3);
- each hinged door (10) comprises a longitudinal guide rail section (11) located at the same height as the guide rails (7);
- when the hinged doors (10) are opened to 90 degrees, each guide rail section (11) extends one of the guide rails (7), allowing the motor-driven handling device (5) to move both on the guide rails (7) and on the guide rail sections (11).

2. Vehicle (3) according to claim 1, **characterized in that** the guide rails (7) are located at the upper part of the vehicle and **in that** the guide rail sections (11) are located at the upper part of the hinged doors (10), when the articulated doors (10) are opened to 90 degrees, each guide rail (7) being located in the immediate proximity and along the same longitudinal axis as an associated guide rail section (11).

3. Vehicle (3) according to claim 1 or 2, **characterized in that** the hinged doors (10) comprise hinges situated on the inner faces of the loading space.

4. Vehicle (3) according to any one of the preceding claims, **characterized in that** it comprises two loading structures (3b, 3c) coupled together, each of them comprising a pair of guide rails (7a, 7b) for the movement of the motor-driven handling device (5), and **in that** it further comprises elements of convergence of the guide rails (7a, 7b) supported by each of the loading structures (3b, 3c) so that each pair of guide rails (7b) of one loading structure (3c) is brought into the immediate proximity of the pair of guide rails (7a) of the other loading structure (3b) or vice versa.

5. Vehicle (3) according to claim 4, **characterized in that** the elements of convergence comprise a telescopic towbar (12).

6. Vehicle (3) according to claim 4, **characterized in that** the elements of convergence comprise telescopic guide rails (7a or 7b).

7. Vehicle (3) according to claim 4, **characterized in that** the elements of convergence are capable of moving one loading structure (3b or 3c) with respect to the other loading structure (3c or 3b).

8. Vehicle (3) according to any one of claims 1 to 3, **characterized in that** it comprises a tractor and a semi-trailer that supports the loading structure (3a).

9. Vehicle (3) according to any one of claims 4 to 7, **characterized in that** it comprises a tractor supporting the loading structure (3a) and a coupled trailer supporting the other loading structure (3b).

10. Vehicle (3) according to any one of claims 4 to 7, **characterized in that** it comprises a centering system to compensate for a slight offset between the front guide rails (7a) and the rear guide rails (7b) during convergence of the two loading structures (3b, 3c), said centering system comprising a pair of engagement cones (13) and recesses (13a) of complementary shape, provided on the respective ends of each guide rail (7b, 7a).

11. Vehicle (3) according to any one of claims 4 to 7, **characterized in that** it comprises a compensation system capable of compensating for a slight roll, pitch and yaw between the bases (9) of the loading structures (3b, 3c) during their mutual convergence, said compensation system comprising engagement parts of complementary shape on bases (9), which parts comprise a recessed female engagement part (16a) provided at the rear of the base (9) of the front loading structure (3b) and a projecting male engagement part (16b) provided at the front of the base (9) of the rear loading structure (3c).

12. Vehicle (3) according to claim 11, **characterized in that** each of the engagement parts (16a, 16b) has a sloped part (17a, 17b) serving as guide ramp and stop for the reception of the male engagement part (16b) within the female engagement part (16a).
